# EUROPÄISCHE PATENTSCHRIFT

(11) **EP 2 676 542 B1**
(45) Veröffentlichungstag und Bekanntmachung des Hinweises auf die Patenterteilung: **01.11.2017**
(21) Anmeldenummer: 13173133.3
(22) Anmeldetag: 21.06.2013
(51) Int. Cl.: A01K 1/00, A01K 31/00

(54) **Nutztierstallheizvorrichtung**
Heating device for farming sheds
Dispositif de chauffage pour bâtiments d'élevage

(30) Priorität: 22.06.2012 DE 202012006010 U
(43) Veröffentlichungstag der Anmeldung: 25.12.2013
(73) Patentinhaber: Reinhold Wesselmann GmbH, 49688 Lastrup / Nieholte (DE)
(72) Erfinder: Wesselmann, Reinhold, 49661 Cloppenburg (DE)
(74) Vertreter: Eisenführ Speiser

(56) Entgegenhaltungen:
- DE-U1- 20 008 215
- DE-U1- 20 314 018
- DE-U1-202006 009 501
- GB-A- 2 135 442
- GB-A- 2 459 063

## Beschreibung

Die Erfindung betrifft eine Nutztierstallheizvorrichtung, umfassend eine Lufteinlassöffnung, eine Luftauslassöffnung und einen Kanal in Strömungsrichtung zwischen Lufteinlass- und Luftauslassöffnung, einen innerhalb des Kanals angeordneten Wärmetauscher, der von der Luft, welche von der Lufteinlass- zur Luftauslassöffnung strömt, durchströmt wird und diese Luft dabei erwärmt und eine Gebläsevorrichtung zum Fördern von Luft von der Lufteinlass- zur Luftauslassöffnung.

Solche Nutztierstallheizvorrichtungen werden dazu eingesetzt, um innerhalb eines Nutztierstalles einerseits Luftbewegung für ein günstiges Klima zu erzeugen, andererseits eine Heizwirkung innerhalb des Nutztierstalles zu erzielen, um eine für die Nutztiere günstige Temperatur im Nutztierstall zu halten. Dabei funktionieren diese Nutztierstallheizvorrichtungen grundsätzlich nach dem Prinzip, dass Luft durch die Lufteinlassöffnung in den Kanal eingezogen wird, den Wärmetauscher durchläuft und hierbei erwärmt wird und dann durch die Luftauslassöffnung in den Stall abgegeben wird. Heizvorrichtungen dieser Bauweise sind in unterschiedlicher Ausführung bekannt und können ein oder mehrere Lufteinlassöffnungen, ein oder mehrere Luftauslassöffnungen umfassen. Der Wärmetauscher ist bei solchen Nutztierstallheizvorrichtungen oftmals als Luft-Wasser-Wärmetauscher ausgeführt, d.h. die Luft durchläuft ein Register mit feinen Lamellen und Heizrohren, die von erwärmtem Wasser durchströmt werden und nimmt hierbei aus dem Wasser durch konvektive Wärmeübertragung Wärme auf.

Die Gebläsevorrichtung ist typischerweise als Ventilator ausgeführt und kann vor oder hinter dem Wärmetauscher angeordnet sein, um die erforderliche Luftbewegung durch die Lufteinlassöffnung, den Wärmetauscher und die Luftauslassöffnung zu erzeugen.

Eine solche Nutztierstallheizvorrichtung wird oftmals für Geflügelställe in der Geflügelaufzucht eingesetzt. Bei der Geflügelaufzucht werden die Tiere typischerweise in Bodenhaltung gehalten und für ein tiergerechtes Klima ist bei dieser Haltungsform eine ständige Luftdurchmischung erforderlich, um einen trockenen Boden im Nutztierstall zu erhalten. Eine Nutztierheizvorrichtung für Geflügelställe ist aus DE 20 2006 009 501 U vorbekannt. Aus GB 2 135 442 A ist eine Luftversorgungsanordnung vorbekannt, bei der in Strömungsrichtung hintereinander Filtermittel, Wärmeaustauschmittel sowie ein Impeller zwischen zwei Einlassöffnungen und mehreren Auslassöffnungen angeordnet ist.

Ein Problem bei Nutztierheizvorrichtungen dieser Bauart besteht darin, dass der Wärmetauscher mit zunehmender Nutzungsdauer verschmutzt und hierdurch der Strömungswiderstand durch den Wärmetauscher sich erhöht. Weil eine Reinigung des Wärmetauschers nur mit erheblichem Aufwand während der Aufzucht der Nutztiere möglich wäre, muss daher ein immer höherer Strömungswiderstand durch den Wärmetauscher überwunden werden, um eine ausreichende Luftbewegung im Nutztierstall zu erzielen bzw. es muss eine Abnahme der Luftbewegung im Nutztierstall hingenommen werden, sofern der zunehmende Strömungswiderstand des Wärmetauschers nicht durch entsprechende Leistungssteigerung kompensiert werden kann. Es ist ein erstes Ziel der Erfindung, diesen Nachteil zu überwinden und eine Nutztierstallheizvorrichtung bereitzustellen, welche in besserer Weise als bekannte Heizvorrichtungen eine Luftbewegung innerhalb des Nutztierstalls erreicht und aufrecht erhält.

Ein zweites Problem, welches bei solchen Heizvorrichtungen für Nutztierställe auftritt, ist die Art und Weise der Luftbewegung. Grundsätzlich ist es nicht wünschenswert, dass Nutztiere durch die Heizvorrichtung einem unmittelbaren Zug ausgesetzt werden, hingegen ist es angestrebt, eine bodennahe, praktisch horizontale Luftströmung zu erzeugen. Nutztierheizvorrichtungen der eingangs beschriebenen Bauweise können grundsätzlich so betrieben werden, dass sie Außenluft ansaugen, beispielsweise durch einen Ansaugkamin im Dach des Nutztierstalls, dass sie Luft aus dem Nutztierstall ansaugen, um eine Umwälzung zu erzielen oder eine Mischform hieraus. Häufig werden solche Heizvorrichtungen solcherart angeordnet, dass die Einlassöffnung als obere, stirnseitige Öffnung des Kanals oder des Wärmetauschers im oberen Bereich des Nutztierstalls angeordnet ist, der Kanal sich senkrecht nach unten erstreckt und die Auslassöffnungen am unteren Ende des Kanals angeordnet sind, beispielsweise in radialer Richtung am Kanal ausgebildet sind. Ein Problem dieser Anordnung besteht darin, die vertikale Luftbewegung durch den Kanal in eine angestrebt horizontale Luftbewegung umzuleiten und hierbei
eine ausreichende Wurfweite zu erzielen. Unter der Wurfweite ist hierbei zu verstehen, dass die Luftbewegung über eine angestrebt große horizontale Distanz erzielt wird, um auch in den Randbereichen des Stalls eine für das Klima und die Nutztierhaltung günstige Luftbewegung zu erzielen. Es ist eine zweite Aufgabe der Erfindung, eine Heizvorrichtung für Nutztierställe bereitzustellen, welche eine größere Wurfweite als bekannte Heizvorrichtungen aufweist, ohne hierbei ungünstig hohe Strömungsgeschwindigkeiten im Bereich unmittelbar benachbart zu der Heizvorrichtung zu erzeugen.

Diese Aufgaben werden erfindungsgemäß gelöst, indem bei einer Nutztierstallheizvorrichtung der vorgangs beschriebenen Bauart die Gebläsevorrichtung in Strömungsrichtung hinter dem Wärmetauscher angeordnet ist, und dass in Strömungsrichtung zwischen dem Wärmetauscher und der Gebläsevorrichtung eine zweite Lufteinlassöffnung angeordnet ist, welche mittels eines Stauventils betätigt ist, das bei Unterschreiten eines vorbestimmten Unterdrucks im Bereich der zweiten Lufteinlassöffnung öffnet.

Durch die Bereitstellung einer oder mehrerer zweiter Lufteinlassöffnungen im Bereich zwischen Wärmetauscher und Gebläsevorrichtung und stromabwärts von dem Wärmetauscher wird es ermöglicht, bei zunehmendem Strömungswiderstand des Wärmetauschers infolge Verschmutzung Luft unmittelbar in den Kanal unterhalb des Wärmetauschers einzusaugen. Hierdurch kann der Luftdurchsatz durch die Luftauslassöffnungen auch bei zunehmender Verstopfung des Wärmetauschers in gewünschtem Maße aufrechterhalten werden bzw. nahezu konstant gehalten werden, um hierdurch die Luftbewegung innerhalb des Nutztierstalls in dem gewünschten Maße aufrechtzuerhalten. Aus der Luftauslassöffnung strömt in diesem Fall ein Gemisch aus einer ersten Luftmenge, die durch die Lufteinlassöffnung und den Wärmetauscher strömt und einer zweiten Luftmenge, die durch die zweiten Lufteinlassöffnungen strömt und den Wärmetauscher nicht durchströmt. Die Erfindung macht sich hierbei zunutze, dass aufgrund der reduzierten Strömungsgeschwindigkeit durch den Wärmetauscher infolge der zweiten einströmenden Luftmenge durch die zweiten Einlassöffnungen die Luft im Wärmetauscher länger verweilt und folglich in höherem Maße aufgeheizt wird. Der Abfall der Temperatur der durch die Luftauslassöffnungen abgegebenen Luft fällt daher nur gering aus, da die unerwärmte Luft aus den zweiten Lufteinlassöffnungen mit entsprechend höher erwärmter Luft aus der Lufteinlassöffnung und dem Wärmetauscher vermischt wird.

Weiterhin macht sich die Erfindung eine typische Betriebsweise für Nutztieraufzuchtställe zunutze. Diese Betriebsweise besteht darin, vor Besatz des Nutztierstalls mit Jungtieren, beispielsweise Küken, den Stall einer vollständigen Reinigung - und ggf. auch Desinfektion - zu unterziehen. Bei dieser vollständigen Reinigung besteht auch die Möglichkeit, ohne größeren Aufwand, wie beispielsweise Umstallung von Tieren, die Nutztierheizvorrichtung in dem Stall vollständig zu reinigen. Zu Beginn der Nutztieraufzucht ist daher regelmäßig der Wärmetauscher gereinigt und weist einen geringen Strömungswiderstand auf. Hierdurch kann zu Beginn der Nutztieraufzucht, also genau dann, wenn sehr junge Tiere mit hohem Wärmebedarf im Nutztierstall gehalten werden, eine hohe Heizleistung erreicht werden, weil die gesamte, aus den Luftauslassöffnungen austretende Luft zuvor den Wärmetauscher durchströmt hat. Die Schmutzbelastung der Luft in dem Nutztierstall nimmt typischerweise mit Fortdauer der Aufzucht zu, da insbesondere größere Tiere eine höhere Luftbelastung verursachen. Daher kommt es zu Beginn der Aufzucht nur zu einem sehr geringen Absinken der Durchlässigkeit des Wärmetauschers, der Strömungswiderstand des Wärmetauschers nimmt erst in späteren Aufzuchtphasen signifikant zu. In diesen späteren Aufzuchtphasen, wenn im Nutztierstall bereits größere, erwachsene Tiere gehalten werden, ist der Wärmebedarf hingegen nicht mehr so hoch und stattdessen kommt der ausreichenden Luftbewegung innerhalb des Stalls eine herausragende Bedeutung zu. Durch die erfindungsgemäße Ausgestaltung der Heizvorrichtung kann durch Öffnen der zweiten Lufteinlassöffnungen diese ausreichende Luftbewegung im Nutztierstall sichergestellt werden, weil der erhöhte Strömungswiderstand des Wärmetauschers hierdurch ausgeglichen und Luft aus einer anderen Zuluftöffnung in den Kanal eingezogen werden kann.

Grundsätzlich ist zu verstehen, dass die erfindungsgemäße Heizvorrichtung eine oder mehrere zweite Lufteinlassöffnungen aufweisen kann, die durch ein zentrales Stauventil oder durch jeweils ein Stauventil für jede Lufteinlassöffnung betätigt sein kann. Die Betätigung durch das Stauventil besteht darin, dass die Lufteinlassöffnung durch das Stauventil geschlossen sein kann, geöffnet sein kann oder eine teilweise Öffnung haben kann. Das Stauventil kann hierbei in unterschiedlicher Weise angesteuert werden. Beispielsweise ist eine unterdruckbetätigte Öffnung des Stauventils möglich, ebenso kann eine aktuatorbetätigte Öffnung des Stauventils erfolgen, wobei der Aktuator durch eine entsprechende Steuerung in Abhängigkeit des Unterdrucks im Kanal, insbesondere in Strömungsrichtung hinter dem Wärmetauscher angesteuert werden kann.

Die erfindungsgemäße Nutztierstallheizvorrichtung kann in verschiedener Nutzung im Nutztierstall eingesetzt werden und entsprechend verschieden ausgerichtet sein. Zum einen kann der Kanal vertikal ausgerichtet sein, um Luft aus einem oberen Bereich des Nutztiertsall anzusaugen und in einem unteren Bereich auszuwerfen. In diesem Fall liegen Einlassöffnung und Auslassöffnung(en) auf unterschiedlichen Höhen. Die Auslassöffnungen können dann insbesondere so ausgerichtet sein, dass sie die Luft horizontal auswerfen, d.h. es findet eine Umlenkung des Luftstroms um 90° statt. In einer anderen Anwendung kann die Nutztierstallheizvorrichtung die Luft horizontal oder im wesentlichen horizontal fördern, d.h. die Lufteinlassöffnung und die Luftauslassöffnung liegen auf derselben oder nahezu derselben Höhe. In diesem Fall wird die Nutztierstallheizvorrichtung axial durchströmt und es erfolgt keine Umlenkung des Luftstroms. Diese Anwendungsweise eignet sich beispielsweise für eine Heizung und einen Lufttransport in einem Nutztierstall in Längenrichtung mit großer Volumendurchsatz und großer Wurfweite.

Die eingangs oder zuvor beschriebene Nutztierstallheizvorrichtung kann weiter fortgebildet werden, indem die Luftauslassöffnung durch mehrere Radialöffnungen gebildet wird, deren Durchströmungsrichtungen schräg, insbesondere senkrecht zur Durchströmungsrichtung des Kanals liegen, und dass die Gebläsevorrichtung als Axial-Ventilator ausgebildet ist, dessen Flügel in einem oberen Abschnitt von einer den Kanal begrenzenden Wand umgeben sind und in einem unteren Abschnitt in einem Verteilergehäuse liegen, an dem die Radialöffnungen ausgebildet sind. Diese Fortbildung der Erfindung macht sich die Erkenntnis zunutze, dass durch eine teilweise Anordnung der Flügel der Gebläsevorrichtung in dem Verteilergehäuse eine vorteilhafte Beschleunigung der Luft nach radial auswärts durch die Luftauslassöffnungen des Verteilergehäuses erzielt werden kann. Dies wird grundsätzlich erreicht, selbst wenn die Gebläsevorrichtung als reines Axial-Gebläse ausgeführt ist, da auch in diesem Fall eine Radial-Auswärtsbeschleunigung stattfindet, insbesondere kann die Gebläsevorrichtung aber auch als Axial-Radial-Gebläse ausgeführt sein oder als Mischform eines Axial-Radial-Gebläses und einer Axial-Gebläsevorrichtung. Insbesondere in Verbindung mit den zweiten Lufteinlassöffnungen kann durch diese Platzierung der Gebläsevorrichtung eine besonders hohe Wurfweite der Heizvorrichtung erreicht und über die Nutzungsdauer aufrechterhalten werden, ohne dass hierfür eine Leistungssteigerung der Gebläsevorrichtung mit damit einhergehenden hohen lokalen Strömungsgeschwindigkeiten im Bereich unmittelbar benachbart zur Heizvorrichtung erfolgen muss.

Dabei ist es weiter bevorzugt, dass das Verteilergehäuse eine untere Begrenzungswand aufweist, die an ihrer zum Innenraum des Verteilergehäuses weisenden Fläche statische Leitschaufeln aufweist, die ausgehend von einem Mittelbereich in einer vorzugsweise der Rotationsrichtung des Axialventilators entsprechenden gekrümmten Linie von innen nach außen verlaufen. Durch die Anordnung solcher statischer Leitschaufeln, also Leitschaufeln, die fest innerhalb der Nutztierstallheizvorrichtung montiert und unbeweglich sind, werden Toträume innerhalb des Verteilergehäuses in wirksamer Weise vermieden und eine effiziente Weiterleitung des Luftstroms zu den Luftauslassöffnungen bewirkt. Dabei kann die Anzahl der statischen Leitschaufeln der Anzahl der Luftauslassöffnungen entsprechen oder diese übersteigen, um eine entsprechend effiziente Beaufschlagung jeder einzelnen Luftauslassöffnung zu erreichen.

Noch weiter ist es bevorzugt, dass sich der Wärmetauscher über den gesamten Querschnitt des Kanals erstreckt, sodass sämtliche durch die Einlassöffnung strömende Luft durch den Wärmetauscher strömt. Diese Ausführungsform weist gegenüber Ausführungsformen, bei denen der Wärmetauscher in einem Bypass umgangen werden kann, erhebliche Vorteile auf, da einerseits die gesamte Breite des Kanals zur Wärmetauschung zur Verfügung steht und folglich eine hohe Effizienz bei geringem Strömungswiderstand erreicht werden kann. Weiterhin wird ein konstruktiv einfacher Aufbau mit leichter Reinigungsmöglichkeit, leichter Montage und Wartung der gesamten Nutztierheizvorrichtung erreicht. Es ist zu verstehen, dass der Wärmetauscher sich grundsätzlich in einer Ebene erstrecken kann, die senkrecht zur Durchströmungsrichtung des Kanals liegt, alternativ aber auch schräg zu dieser Durchströmungsrichtung angeordnet sein kann, um die Oberfläche des Wärmetauschers zu vergrößern.

Gemäß einer weiteren bevorzugten Ausführungsform ist vorgesehen, dass die Luftauslassöffnung durch mehrere Radialöffnungen gebildet wird, deren Durchströmungsrichtungen schräg, insbesondere senkrecht zur Durchströmungsrichtung des Kanals liegen. Durch eine solche Ausgestaltung der Luftauslassöffnung in Gestalt mehrerer radialer ausgerichteter Öffnungen wird eine wirksame Verteilung der Luft innerhalb des Nutztierstalls rund um die Nutztierstallheizvorrichtung erzielt. Insbesondere kann durch diese Anordnung eine hohe Wurfweite der ausströmenden Luft erreicht werden. Dabei ist es besonders bevorzugt, wenn die Luft in einer horizontalen Strömungsrichtung durch die Luftauslassöffnungen gerichtet wird, um eine unmittelbare Anströmung der Tiere zu vermeiden und eine hohe Wurfweite zu erreichen.

Noch weiter ist es bevorzugt, dass die Radialöffnungen an einem Verteilergehäuse ausgebildet sind, und zwischen zwei Radialöffnungen jeweils eine starre oder bewegliche, in den Innenraum des Verteilergehäuses ragende Luftleitklappe angeordnet ist, die insbesondere schwenkbar um eine radial äußere, parallel zur Längsachse des Kanals liegende Achse ist. Bei dieser Ausführungsform kann die Luft in einer an die Stallgeometrie angepassten Weise in dem Nutztierstall verteilt werden, indem einzelne Radialöffnungen in spezifischer Weise durchströmt werden. Die hierbei einzustellende Variabilität besteht darin, dass bestimmte Radialöffnungen mit einem höheren Luftdurchsatz beaufschlagt werden als andere Radialöffnungen und dass die Durchströmungsrichtung der Radialöffnungen in der horizontalen Ebene in einem bestimmten Winkelbereich, der geändert werden kann, um hierdurch eine Anpassung an den Grundriss des Nutztierstalls zu erzielen. Die Luftleitklappe kann dabei insbesondere solcherart ausgeführt sein, dass sie manuell verstellbar und in einer entsprechend verstellten Position fixierbar ist, da nur eine einmalige Anpassung der Ausrichtung der Luftleitklappe an die Stallarchitektur erforderlich ist. Grundsätzlich können in dem Verteilergehäuse entsprechend mehrere solche Luftleitklappen vorhanden sein, insbesondere kann die Anzahl der Luftleitklappen der Anzahl der Radialöffnungen entsprechen.

Es ist weiterhin bevorzugt, dass die Radialöffnungen in Umfangsrichtung um die Längsachse des Kanals gleichmäßig, vorzugsweise rotationssymmetrisch angeordnet sind. Durch eine solche Anordnung der Radialöffnungen wird einerseits eine effiziente Umlenkung der durch den Kanal strömenden Luft innerhalb des Verteilergehäuses begünstigt, weiterhin wird durch eine solche Anordnung die vollständige Beaufschlagung eines Nutztierstalls mit einer Luftbewegung bei zugleich großer Wurfweite in besonders günstiger Weise ermöglicht.

Gemäß einer weiteren bevorzugten Ausführungsform ist vorgesehen, dass die zweite Einlassöffnung durch mehrere radial in der Kanalwand angeordnete Zuluftöffnungen gebildet wird, und das Stauventil durch entsprechend mehrere Zuluftventile gebildet wird. Durch solche entsprechend mehrere Zuluftöffnungen wird innerhalb des Kanals vor der/den Auslassöffnung(en) eine gleichmäßige Strömungsgeschwindigkeitsverteilung über dem Querschnitt des Kanals erreicht und hierdurch eine homogene Durchströmung der Auslassöffnungen begünstigt. Insbesondere kann hierdurch vermieden werden, dass bei Ausströmung der Luft durch mehrere Auslassöffnungen eine inhomogene Luftverteilung durch diese Auslassöffnungen erzeugt wird.

Dabei ist es besonders bevorzugt, dass die Zuluftöffnungen in Umfangsrichtung um die Längsachse des Kanals gleichmäßig, vorzugsweise rotationssymmetrisch angeordnet sind. Durch eine solche gleichmäßige Verteilung der Zuluftöffnungen, insbesondere rotationssymmetrische Verteilung um die Längsachse des Kanals wird die homogene Luftströmung über den Querschnitt des Kanals weiter verstärkt, was zu einer insgesamt homogenen Verteilung der Luft in dem Nutztierstall durch mehrere Auslassöffnungen beiträgt.

Die erfindungsgemäße Heizvorrichtung kann weiter fortgebildet werden, indem das Stauventil bzw. jedes Zuluftventil eine federbelastete Zuluftklappe umfasst, welche durch eine Federkraft in einer Schließposition gehalten wird und bei Übersteigen eines vorbestimmten Unterdrucks im Kanal durch den Unterdruck gegen die Federkraft in eine Offenposition bewegt wird, vorzugsweise in einer zum Unterdruck proportionalen Öffnungsbewegung. Diese Ausgestaltung ermöglicht eine robuste Ansteuerung des Stauventils bzw. mehrerer Stauventile je nach Bedarf, d.h. je nach Verschmutzungsgrad des Registers des Wärmetauschers und dessen entsprechend erhöhtem Strömungswiderstand. Die Zuluftklappe kann dabei insbesondere solcherart schwenkbar gelagert sein, dass sie die durch die Zuluftöffnung einströmende Luft abwärts in den Kanal hineinlenkt, d.h. die Zuluftklappe kann insbesondere nach einwärts in den Kanal öffnend und mit einen in Strömungsrichtung oberhalb des Flächenschwerpunkts der Zuluftklappe angeordneten Schwenkachse versehen sein.

Weiterhin ist es bevorzugt, dass das Stauventil bzw. jedes Zuluftventil eine aktuatorbetätigte Zuluftklappe umfasst, welche mittels eines durch eine elektronische Steuerungsvorrichtung angesteuerten Aktuators geöffnet bzw. geschlossen wird. Die aktuatorbetätigte Ansteuerung der Zuluftklappe kann alternativ oder zusätzlich zur Federbelastung der Zuluftklappe vorgesehen sein, um bei bestimmten Erfordernissen im Nutztierstall die Zuluftklappen auch unabhängig von dem im Kanal herrschenden Unterdruck öffnen zu können. Der Aktuator kann hierbei insbesondere ein pneumatischer Zylinder sein, der durch entsprechende Druckluftleitungen und ein angesteuertes Druckluftventil betätigt werden kann.

Schließlich ist gemäß einer weiteren bevorzugten Ausführungsform vorgesehen, die erfindungsgemäße Heizvorrichtung fortzubilden durch eine Steuerungsvorrichtung zur Ansteuerung der Gebläsevorrichtung, die ausgebildet ist, um die Gebläsevorrichtung in zumindest zwei Leistungsstufen zu betreiben. Während es bei bekannten Nutztierstallheizvorrichtungen in der Regel nicht wirksam ist, die Gebläsevorrichtung in mehr als einer Leistungsstufe anzusteuern, weil hierdurch der Strömungswiderstand des Wärmetauschers einen sehr ineffizienten Betrieb verursachen würde. Erfindungsgemäß kann die zweite Leistungsstufe der Gebläsevorrichtung solcherart gewählt sein, dass der Unterdruck im Kanal in Strömungsrichtung hinter dem Wärmetauscher zu einer Öffnung der zweiten Einlassöffnungen führt und hierdurch ein weiterhin effizienter Betrieb erreicht wird.

Eine bevorzugte Ausführungsform der Erfindung wird anhand der beiliegenden Figuren erläutert. Es zeigen:
Fig. 1 eine perspektivische Ansicht von schräg oben der bevorzugten Ausführungsform,
Fig. 2 eine Seitenansicht der Ausführungsform gemäß Fig. 1,
Fig. 3 eine entlang der Linie A-A längs geschnittene Seitenansicht der Ausführungsform gemäß Fig. 2,
Fig. 4 eine entlang der Linie B-B quer geschnittene Draufsicht auf die Ausführungsform gemäß Fig. 2.

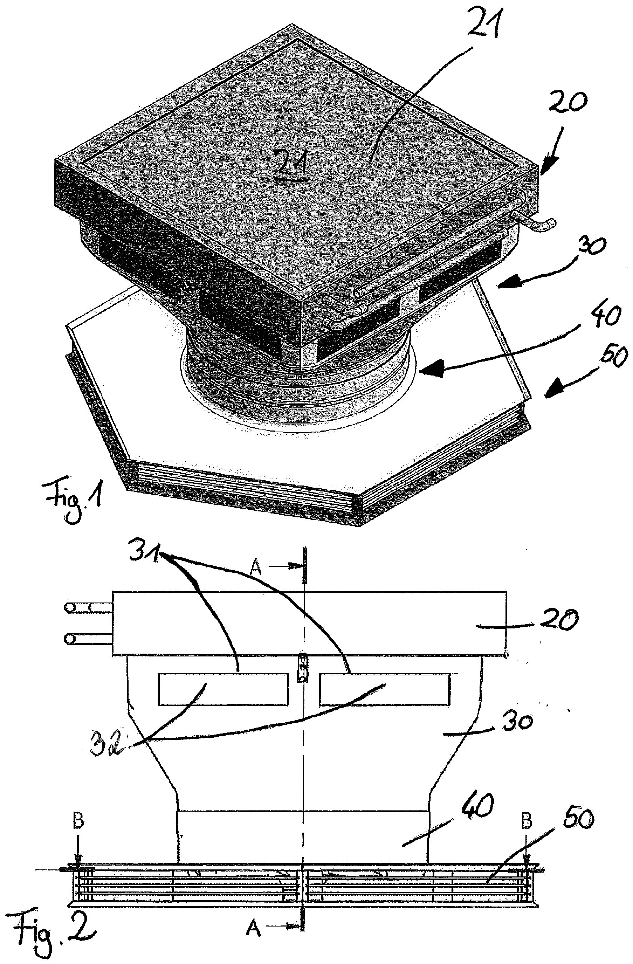

Bezug nehmend zunächst auf die Figuren 1 und 2 umfasst eine erfindungsgemäße Nutztierstallheizvorrichtung einen Wärmetauscher 20, der mit einer quadratischen Querschnittsfläche versehen ist, die von Luft durchströmt wird. Die obere Fläche 21 des Wärmetauschers stellt im Ausführungsbeispiel eine erste Einlassöffnung dar, wobei zu verstehen ist, dass sich an den Wärmetauscher stromaufwärts noch ein Luftkanal anschließen kann, um Luft aus einem weiter oben liegenden Bereich anzusaugen.

Der Wärmetauscher ist mit Zu- und Abströmleitungen für Heißwasser versehen. Die Querschnittsfläche des Wärmetauschers ist mit entsprechend kleinen Wärmetauscherrohren und einem Lamellenregister versehen, um Wärme von dem Heißwasser an die den Wärmetauscher durchströmende Luft zu übertragen.

Unterhalb des Wärmetauschers 20 ist eine Luftleitkanal 30 angeordnet, der in Strömungsrichtung aus einem anfänglich quadratischen Querschnitt in einem Übergangsbereich kontinuierlich in einen kreisrunden Querschnitt übergeht.

An den kreisrunden Abschnitt des Luftleitkanals schließt sich ein Axialgebläse 40 an, welches Luft durch den Wärmetauscher 20 und den Luftleitkanal 30 saugt. Diese Luft wird von dem Axialgebläse in ein Verteilergehäuse 50 eingeblasen und aus diesem Verteilergehäuse durch insgesamt sechs Luftauslassöffnungen abgegeben.

Das Verteilergehäuse weist, wie aus den Figuren ersichtlich, eine sechseckige Querschnittsform auf, wobei die sechs Luftauslassöffnungen im Randbereich des Sechsecks angeordnet sind und senkrecht zur Durchströmungsrichtung des Kanals durchströmt werden. Die aus dem Verteilergehäuse 50 durch die Luftauslassöffnungen austretende Luft wird dadurch horizontal aus der Heizvorrichtung ausgeworfen.

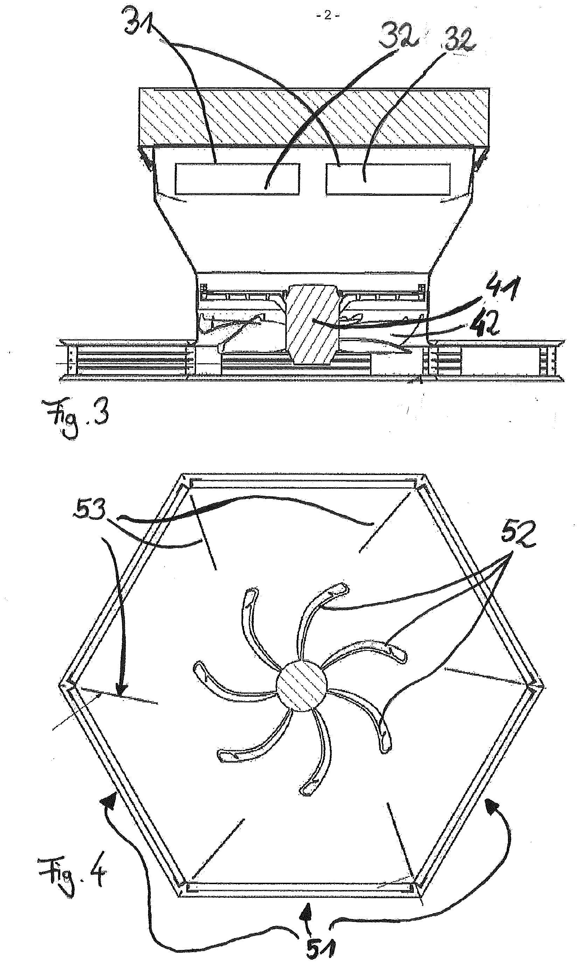

Wie man insbesondere Fig. 2 und Fig. 3 entnehmen kann, umfasst das Axialgebläse einen mittels eines Elektromotors 41 angetriebenen Ventilator 42, dessen Flügel sich teilweise im kreisrunden Abschnitt des Luftleitkanals 30 befinden und teilweise im Verteilergehäuse 50 angeordnet sind. Durch diese Anordnung der Flügel des Ventilators wird die mit diesem Ventilator geführte Luft innerhalb des Verteilergehäuses in radialer Richtung auswärts beschleunigt und die Wurfweite der Heizvorrichtung in effizienter Weise erhöht.

In einem in Strömungsrichtung unmittelbar hinter dem Wärmetauscher 20 liegenden Bereich des Luftleitkanals 30 sind insgesamt acht Zuluftöffnungen 31 in der Kanalwand ausgebildet. Die acht Zuluftöffnungen sind im Bereich des Luftleitkanals mit quadratischem Querschnitt platziert, wobei zu jeder Seite jeweils zwei Zuluftöffnungen weisen. Jede Zuluftöffnung ist mittels einer Zuluftklappe 32 verschlossen, die schwenkbar um eine Achse gelagert ist, die am oberen, zum Wärmetauscher weisenden Rand der Zuluftöffnung verläuft. Jede Zuluftklappe wird durch eine Blattfeder in der GeschlossenStellung gehalten. Die Federkraft dieser Blattfeder ist so bemessen, dass die Zuluftklappe bei zunehmendem Unterdruck im Luftleitkanal zwischen Wärmetauscher und Axialgebläse gegen die Federkraft nach innen schwenkt und hierdurch öffnet, wodurch Luft durch die Zuluftöffnungen in diesen Bereich des Luftleitkanals eingesogen werden kann. Die Federkraft, mit der die Zuluftklappen zugehalten werden, kann insbesondere verstellbar sein, um die Menge der zusätzlich einströmenden Luft in Abhängigkeit von der Stallgeometrie einstellen zu können.

Durch diese Maßnahme wird trotz einer etwaigen Verschmutzung und insbesondere bei zunehmender Verschmutzung des Registers des Wärmetauschers eine weiterhin ausreichende Luftdurchströmung durch die Luftauslassöffnungen erreicht und hierdurch die Luftumwälzung innerhalb des Nutztierstalls in ausreichendem Maße aufrechterhalten.

Fig. 4 kann die Gestaltung der unterseitigen Begrenzungswand des Verteilergehäuses auf der Innenseite zum luftleitenden Raum entnommen werden. Wie ersichtlich, sind mehrere Luftleitelemente 52, 53 hier angeordnet. Im mittleren Bereich ist eine Luftleiteinrichtung mit insgesamt sieben in einer gekrümmten Bahn verlaufenden Luftleitschaufeln 52 platziert, die sich von innen ausgehend nach radial auswärts erstreckt. Durch diese sieben gekrümmt von innen nach radial auswärts verlaufenden Luftleitschaufeln wird die Luft in effizienter Weise aus der senkrecht verlaufenden Strömungsrichtung durch den Luftleitkanal 30 in eine horizontal verlaufende Ausströmrichtung durch die Luftauslassöffnungen umgelenkt.

Weiterhin sind im Bereich zwischen jeder Luftauslassöffnung 51 Luftleitbleche angeordnet, die gerade ausgeführt sind. Diese Luftleitbleche erstrecken sich aus dem Eckenbereich zwischen zwei Luftauslassöffnungen nach radial einwärts. Die Luftleitbleche können statisch angeordnet oder verschwenkbar ausgeführt sein, insbesondere verschwenkbar um eine im Eckenbereich des Verteilergehäuses liegende jeweilige Schwenkachse, um die Verteilungswirkung des Verteilergehäuses auf die einzelnen Lufteinlassöffnungen einstellen zu können.

## Patentansprüche

1. Nutztierstallheizvorrichtung, umfassend:
- eine Lufteinlassöffnung (21), eine Luftauslassöffnung (51) und einen Kanal in Strömungsrichtung zwischen Lufteinlass- und Luftauslassöffnung,
- einen innerhalb des Kanals angeordneten Wärmetauscher (20), der von der Luft, welche von der Lufteinlass- zur Luftauslassöffnung strömt, durchströmt wird und diese Luft dabei erwärmt,
- eine Gebläsevorrichtung (40), die in Strömungsrichtung hinter dem Wärmetauscher angeordnet ist, zum Fördern von Luft von der Lufteinlass- zur Luftauslassöffnung,
- eine zweite Lufteinlassöffnung,
**dadurch gekennzeichnet, dass**
- die zweite Lufteinlassöffnung in Strömungsrichtung zwischen dem Wärmetauscher und der Gebläsevorrichtung angeordnet ist und mittels eines Stauventils (32) betätigt ist, das bei Unterschreiten eines vorbestimmten Unterdrucks im Bereich der zweiten Lufteinlassöffnung öffnet.

2. Nutztierstallheizvorrichtung nach Anspruch 1,
**dadurch gekennzeichnet, dass**
die Luftauslassöffnung durch mehrere Radialöffnungen (51) gebildet wird, deren Durchströmungsrichtungen schräg, insbesondere senkrecht zur Durchströmungsrichtung des Kanals liegen, und dass
die Gebläsevorrichtung als Axial-Ventilator (42) ausgebildet ist, dessen Flügel in einem oberen Abschnitt von einer den Kanal begrenzenden Wand umgeben sind und in einem unteren Abschnitt in einem Verteilergehäuse liegen, an dem die Radialöffnungen ausgebildet sind.

3. Nutztierstallheizvorrichtung nach Anspruch 2,
**dadurch gekennzeichnet, dass** das Verteilergehäuse eine untere Begrenzungswand aufweist, die an ihrer zum Innenraum des Verteilergehäuses weisenden Fläche statische Leitschaufeln aufweist, die ausgehend von einem Mittelbereich in einer der Rotationsrichtung des Axialventilators entsprechenden gekrümmten Linie von innen nach außen verlaufen.

4. Nutztierstallheizvorrichtung nach einem der vorhergehenden Ansprüche, **dadurch gekennzeichnet, dass** sich der Wärmetauscher über den gesamten Querschnitt des Kanals erstreckt, sodass sämtliche durch die Einlassöffnung strömende Luft durch den Wärmetauscher strömt.

5. Nutztierstallheizvorrichtung nach einem der vorhergehenden Ansprüche, **dadurch gekennzeichnet, dass** die Luftauslassöffnung durch mehrere Radialöffnungen gebildet wird, deren Durchströmungsrichtungen schräg, insbesondere senkrecht zur Durchströmungsrichtung des Kanals liegen.

6. Nutztierstallheizvorrichtung nach einem der vorhergehenden Ansprüche, **dadurch gekennzeichnet, dass** die Radialöffnungen an einem Verteilergehäuse ausgebildet sind, und zwischen zwei Radialöffnungen eine vorzugsweise bewegliche, in den Innenraum des Verteilergehäuses ragende Luftleitklappe angeordnet ist, die insbesondere schwenkbar um eine radial äußere, parallel zur Längsachse des Kanals liegende Achse ist.

7. Nutztierstallheizvorrichtung nach dem vorhergehenden Anspruch 5 oder 6, **dadurch gekennzeichnet, dass** die Radialöffnungen in Umfangsrichtung um die Längsachse des Kanals gleichmäßig, vorzugsweise rotationssymmetrisch angeordnet sind.

8. Nutztierstallheizvorrichtung nach einem der vorhergehenden Ansprüche, **dadurch gekennzeichnet, dass** die zweite Einlassöffnung durch mehrere radial in der Kanalwand angeordnete Zuluftöffnungen gebildet wird, und das Stauventil durch entsprechend mehrere Zuluftventile gebildet wird.

9. Nutztierstallheizvorrichtung nach dem vorhergehenden Anspruch, **dadurch gekennzeichnet, dass** die Zuluftöffnungen in Umfangsrichtung um die Längsachse des Kanals gleichmäßig, vorzugsweise rotationssymmetrisch angeordnet sind.

10. Nutztierstallheizvorrichtung nach einem der vorhergehenden Ansprüche, **dadurch gekennzeichnet, dass** das Stauventil bzw. jedes Zuluftventil eine federbelastete Zuluftklappe umfasst, welche durch eine Federkraft in einer Schließposition gehalten wird und bei Übersteigen eines vorbestimmten Unterdrucks im Kanal durch den Unterdruck gegen die Federkraft in eine Offenposition bewegt wird, vorzugsweise in einer zum Unterdruck proportionalen Öffnungsbewegung.

11. Nutztierstallheizvorrichtung nach einem der vorhergehenden Ansprüche, **dadurch gekennzeichnet, dass** das Stauventil bzw. jedes Zuluftventil eine aktuatorbetätigteZuluftklappe umfasst, welche mittels eines durch eine elektronische Steuerungsvorrichtung angesteuerten Aktuators geöffnet bzw. geschlossen wird.

12. Nutztierstallheizvorrichtung nach einem der vorhergehenden Ansprüche, **gekennzeichnet durch** eine Steuerungsvorrichtung zur Ansteuerung der Gebläsevorrichtung, die ausgebildet ist, um die Gebläsevorrichtung in zumindest zwei Leistungsstufen zu betreiben.

## Claims

1. Heating device for a farming shed comprising
- an air inlet opening (21), an air outlet opening (51) and a channel in the flow direction between air inlet opening and air outlet opening,
- a heat exchanger (20) arranged inside the channel, where air flowing from the air
inlet opening to the air outlet opening flows through so that the air is heated,
- a blower device (40), which, in the flow direction, is arranged downstream of the heat exchanger, for conveying air from the air intake opening to the air outlet opening,
- a second air inlet opening,
**characterised in that**
- the second air inlet opening is arranged between the heat exchanger and the blower device in the flow direction and actuated by means of a one-way valve (32), which opens during falling below a preset low pressure in the region of the second air inlet opening.

2. Heating device for a farming shed according to claim 1,
**characterised in that**
the air outlet opening is formed by a plurality of radial openings (51), the flow through directions of which are transversal, in particular at right angles, to the flow through direction of the channel, and **in that**
the blower device is configured as an axial ventilator (42), the blades of which are enclosed in an upper portion by a wall defining the channel and in a lower portion lie in a manifold housing on which the radial openings are configured.

3. Heating device for a farming shed according to claim 2,
**characterised in that** the manifold housing has a lower limiting wall, which has static guide blades on the surfaces thereof pointing towards the interior of the manifold housing, which, proceeding from a central region in one of the directions of rotation of the axial ventilator, run in a corresponding curved line from the inside to the outside.

4. Heating device for a farming shed according to any one of the preceding claims, **characterised in that** the heat exchanger extends over the entire width of the channel such that all the air flowing through the inlet opening flows through the heat exchanger.

5. Heating device for a farming shed according to any one of the preceding claims, **characterised in that** the air outlet opening is formed by a plurality of radial openings, the flow through directions of which are transversal, in particular at right angles, to the flow through direction of the channel.

6. Heating device for a farming shed according to any one of the preceding claims, **characterised in that** the radial openings are configured on a manifold housing, and a preferably moveable air flap projecting into the interior of the manifold housing is arranged between two radial openings, which in particular is pivotable about a radially external axis parallel to the longitudinal axis of the channel.

7. Heating device for a farming shed according to preceding claim 5 or 6, **characterised in that** the radial openings are arranged uniformly, preferably in a rotation-symmetrical manner, in a circumferential direction about the longitudinal axis of the channel.

8. Heating device for a farming shed according to any one of the preceding claims, **characterised in that** the second inlet opening is formed by a plurality of inlet air openings arranged radially in the channel wall, and the one-way valve is formed by a corresponding plurality of inlet air valves.

9. Heating device for a farming shed according to the preceding claim, **characterised in that** the inlet air openings are arranged uniformly, preferably in a rotation-symmetrical manner, in a circumferential direction about the longitudinal axis of the channel.

10. Heating device for a farming shed according to any one of the preceding claims, **characterised in that** the one-way valve, or any inlet valve respectively, comprises a spring-loaded inlet air flap, which is held in a closed position by spring force, and when a preset low pressure in the channel is exceeded, is moved into an open position against the spring force by the low pressure, preferably in an opening movement proportionate to the low pressure.

11. Heating device for a farming shed according to any one of the preceding claims, **characterised in that** the one-way valve, or any inlet valve respectively, comprises an actuator-activated inlet air flap, which is opened or closed respectively by an actuator activated by an electronic control device.

12. Heating device for a farming shed according to any one of the preceding claims, **characterised by** a control device for activating the blower device, which is designed to operate the blower device in at least two power settings.

## Revendications

1. Dispositif de chauffage de bâtiment pour animaux d'élevage, comprenant :
- une ouverture d'entrée d'air (21), une ouverture de sortie d'air (51) et un canal dans le sens d'écoulement entre l'ouverture d'entrée d'air et l'ouverture de sortie d'air,
- un échangeur de chaleur (20) agencé à l'intérieur du canal, qui est traversé par l'air, qui s'écoule de l'ouverture d'entrée d'air à l'ouverture de sortie d'air, et chauffe ce faisant cet air,
- un dispositif de soufflage (40), qui est agencé dans le sens d'écoulement derrière l'échangeur de chaleur, pour le transport d'air de l'ouverture d'entrée d'air à l'ouverture de sortie d'air,
- une deuxième ouverture d'entrée d'air,
**caractérisé en ce que**
- la deuxième ouverture d'entrée d'air est agencée dans le sens d'écoulement entre l'échangeur de chaleur et le dispositif de soufflage et est actionnée au moyen d'une soupape de retenue (32), qui s'ouvre en cas de sous-dépassement d'une dépression prédéfinie au niveau de la deuxième ouverture d'entrée d'air.

2. Dispositif de chauffage de bâtiment pour animaux d'élevage selon la revendication 1,
**caractérisé en ce que**
l'ouverture de sortie d'air est formée par plusieurs ouvertures radiales (51), dont les directions de passage sont obliques, en particulier perpendiculaires, à la direction de passage du canal, et **en ce que**
le dispositif de soufflage est réalisé en tant que ventilateur axial (42), dont les ailes sont entourées dans une section supérieure par une paroi limitant le canal et se situent dans une section inférieure dans un boîtier de répartition, au niveau duquel les ouvertures radiales sont réalisées.

3. Dispositif de chauffage de bâtiment pour animaux d'élevage selon la revendication 2,
**caractérisé en ce que** le boîtier de répartition présente une paroi de limitation inférieure, qui présente, au niveau de sa surface dirigée vers l'espace intérieur du boîtier de répartition, des aubes directrices statiques, qui s'étendent de l'intérieur vers l'extérieur en partant d'une zone médiane selon une ligne courbe correspondant au sens de rotation du ventilateur axial.

4. Dispositif de chauffage de bâtiment pour animaux d'élevage selon l'une quelconque des revendications précédentes,
**caractérisé en ce que** l'échangeur de chaleur s'étend sur toute la section transversale du canal, si bien que l'ensemble de l'air s'écoulant par l'ouverture d'entrée s'écoule par l'échangeur de chaleur.

5. Dispositif de chauffage de bâtiment pour animaux d'élevage selon l'une quelconque des revendications précédentes,
**caractérisé en ce que** l'ouverture de sortie d'air est formée par plusieurs ouvertures radiales, dont les directions de passage sont obliques, en particulier perpendiculaires, à la direction de passage du canal.

6. Dispositif de chauffage de bâtiment pour animaux d'élevage selon l'une quelconque des revendications précédentes,
**caractérisé en ce que** les ouvertures radiales sont réalisées au niveau d'un boîtier de répartition et un volet de guidage d'air, de préférence mobile, faisant saillie dans l'espace intérieur du boîtier de répartition qui est en particulier pivotant autour d'un axe radialement extérieur situé parallèlement à l'axe longitudinal du canal est agencé entre deux ouvertures radiales.

7. Dispositif de chauffage de bâtiment pour animaux d'élevage selon la revendication précédente 5 ou 6,
**caractérisé en ce que** les ouvertures radiales sont agencées dans le sens périphérique autour de l'axe longitudinal du canal de manière régulière, de préférence symétrique en rotation.

8. Dispositif de chauffage de bâtiment pour animaux d'élevage selon l'une quelconque des revendications précédentes,
**caractérisé en ce que** la deuxième ouverture d'entrée est formée par plusieurs ouvertures d'amenée d'air agencées radialement dans la paroi de canal, et la soupape de retenue est formée par plusieurs soupapes d'amenée d'air correspondantes.

9. Dispositif de chauffage de bâtiment pour animaux d'élevage selon la revendication précédente,
**caractérisé en ce que** les ouvertures d'amenée d'air sont agencées dans le sens périphérique autour de l'axe longitudinal du canal de manière régulière, de préférence symétrique en rotation.

10. Dispositif de chauffage de bâtiment pour animaux d'élevage selon l'une quelconque des revendications précédentes,
**caractérisé en ce que** la soupape de retenue ou chaque soupape d'amenée d'air comprend un volet d'amenée d'air sollicité par ressort, lequel est maintenu dans une position fermée par une force élastique et, en cas de dépassement d'une dépression prédéfinie dans le canal, est déplacé dans une position ouverte par la dépression contre la force élastique, de préférence dans un mouvement d'ouverture proportionnel à la dépression.

11. Dispositif de chauffage de bâtiment pour animaux d'élevage selon l'une quelconque des revendications précédentes,
**caractérisé en ce que** la soupape de retenue ou chaque soupape d'amenée d'air comprend un volet d'amenée d'air actionné par actionneur, lequel est ouvert ou fermé par un actionneur commandé par un dispositif de commande électronique.

12. Dispositif de chauffage de bâtiment pour animaux d'élevage selon l'une quelconque des revendications précédentes,
**caractérisé par** un dispositif de commande pour la commande du dispositif de soufflage, qui est réalisé pour faire fonctionner le dispositif de soufflage dans au moins deux niveaux de performance.
